# EUROPÄISCHE PATENTSCHRIFT

(11) **EP 3 073 446 B1**
(45) Veröffentlichungstag und Bekanntmachung des Hinweises auf die Patenterteilung: **20.11.2019**
(21) Anmeldenummer: 16152348.5
(22) Anmeldetag: 22.01.2016
(51) Int. Cl.: G06T 15/04, G06T 15/20, G06T 3/40

(54) **VERFAHREN ZUM DARSTELLEN EINER FAHRZEUGUMGEBUNG EINES FAHRZEUGES**
METHOD FOR REPRESENTING THE SURROUNDINGS OF A VEHICLE
PROCEDE DE REPRESENTATION D'UN ENVIRONNEMENT D'UN VEHICULE AUTOMOBILE

(30) Priorität: 26.03.2015 DE 102015205479
(43) Veröffentlichungstag der Anmeldung: 28.09.2016
(73) Patentinhaber: ROBERT BOSCH GMBH, 70442 Stuttgart (DE)
(72) Erfinder: Esparza Garcia, Jose Domingo, 70178 Stuttgart (DE); Cano, Raphael, 70180 Stuttgart (DE)

(56) Entgegenhaltungen:
- GB-A- 2 459 033
- US-A1- 2014 028 851
- US-A1- 2014 125 774
- FUJITSU: "360 DEG Wrap-Around Video Imaging Technology - Ready for Integration with Fujitsu Graphics SoCs - Youtube Video", INTERNET CITATION , 2010, 2010, Seiten 1-12, XP002698426, Gefunden im Internet: URL:http://www.youtube.com/watch?v=R3bQtlK iqMk [gefunden am 2013-06-04]
- S. Utochkin: "The principles of CCTV design in VideoCAD: Part II Person detection area, person identification area, license plate reading area. Spatial resolution.", CCTVCAD Software , 2003, Seiten 1-24, XP002757927, Gefunden im Internet: URL:http://www.cctvcad.com/Files/the_princ iples_of_cctv_design_in_videocad_part2.pdf [gefunden am 2016-05-20]

## Beschreibung

### Stand der Technik

Die vorliegende Erfindung betrifft ein Verfahren zum Darstellen einer Fahrzeugumgebung eines Fahrzeuges.

Fahrassistenzsysteme zielen darauf ab, einen Fahrer beim Führen eines Fahrzeuges zu unterstützen. Ein solches Unterstützen des Fahrers kann beispielsweise die folgenden Funktionen umfassen:
- Darstellen einer Umgebung im Nahbereich des Fahrzeuges, um Zusammenstöße mit Hindernissen zu vermeiden, die nicht im unmittelbaren Blickfeld des Fahrers liegen,
- Übernehmen einiger Aufgaben des Fahrers, um den Fahrkomfort für den Fahrer zu erhöhen,
- Überwachen von Aktivitäten des Fahrers und Eingreifen bei Gefahrensituationen, und/oder
- automatisiertes Fahren ohne die notwendige Anwesenheit des Fahrers.

Insbesondere betrifft die Erfindung ein Darstellen einer zusammengesetzten Ansicht der Fahrzeugumgebung in einem System zum Darstellen der Fahrzeugumgebung, insbesondere einem sogenannten Surround-View-System. Typischerweise sind dabei Kameras zum Erfassen der Fahrzeugumgebung derart an dem Fahrzeug angeordnet, dass eine 360°-Darstellung der Fahrzeugumgebung ermöglicht wird. Dabei werden die Bilder der Kameras, typischerweise vier Kameras, auf eine schalenförmige oder ähnliche geometrische Projektionsfläche projiziert, wobei intrinsische und extrinsische Daten einer Kamerakalibrierung zur Bildzuordnung genutzt werden.

Ein typisches Problem solcher Systeme ist es, dass durch das Einsetzen tatsächlicher Bilder als Texturen der Projektionsfläche und ein Darstellen der Projektionsfläche mittels einer virtuellen Kamera ein künstliches Rauschen bei der Bildbearbeitung erzeugt wird.

DE10296593T5 und DE102008001076A1 offenbaren Verfahren zum Darstellen einer Fahrzeugumgebung eines Fahrzeuges.

US20140125774A1 offenbart ein Verfahren zur dreimensionalen Darstellung von Umfeldbildern eines Fahrzeuges. GB2459033A offenbart eine Vorrichtung und ein Verfahren zur Reduzierung einer Auflösung eines von einer Kamera erfassten Eingabebildes, welches eine dreidimensionale Szene abbildet, wobei die Reduzierung der Auflösung abhängig von einem Objektabstand in der dreidimensionalen Szene und/oder einer perspektivischen Verzerrung der dreidimensionalen Szene ist. US20140028851A1 offenbart eine Vorrichtung zum Erzeugen eines Bildes, welche eine Vielzahl von Bilderfassungseinheiten umfasst, die miteinander gekoppelt sind und umfasst ferner eine Steuerung, der mit der Vielzahl von Bilderfassungseinheiten gekoppelt ist und eine Entzerrung des Bildes ermöglicht. XP-002757927 "The principles of CCTV design in VideoCAD" offenbart ein Verfahren zur Optimierung von Videoparametern für eine Personenidentifizierung.

Die Veröffentlichung FUJITSU: "360 DEG Wrap-Around Video Imaging Technology - Ready for Integration with Fujitsu Graphics SoCs - Youtube Video", INTERNET CITATION, [Online] Seiten 1-12, XP002698426, zeigt ein Fahrerassitenzsystem mit 360 Grad Umsicht.

### Offenbarung der Erfindung

Das erfindungsgemäße Verfahren zum Darstellen einer Fahrzeugumgebung eines Fahrzeuges umfasst die Schritte eines Erfassens zumindest eines tatsächlichen Kamerabildes mittels zumindest einer an dem Fahrzeug angeordneten Kamera, wobei das tatsächliche Kamerabild die Fahrzeugumgebung darstellt, eines räumlichen Aufspannens des zumindest einen tatsächlichen Kamerabildes in einem virtuellen Raum, eines Bereitstellens eines vorgewählten Bildbereiches des tatsächlichen Kamerabildes, in dem Bildartefakte auftreten, in mehreren Auflösungen, und eines Erzeugens eines virtuellen Kamerabildes aus Sicht einer virtuellen Kamera an einer Position in dem virtuellen Raum, welches das aufgespannte tatsächliche Kamerabild darstellt, wobei für den vorgewählten Bildbereich des tatsächlichen Kamerabildes diejenige der bereitgestellten Auflösungen genutzt wird, welche eine optische Präsenz der Bildartefakte verringert entsprechend der beanspruchten Erfindung.

Dies ist vorteilhaft, da ungewollte Bildartefakte in einer Darstellung der Fahrzeugumgebung vermieden werden. Dabei werden Bildbereiche, in denen keine Bildartefakte auftreten, nicht beeinflusst und deren Bildqualität wird insbesondere nicht durch eine Reduzierung der Auflösung verschlechtert. Eine Anpassung der Auflösung erfolgt lediglich örtlich begrenzt. Dies spart Rechenleistung und Speicher gegenüber einer Reduzierung der Auflösung des gesamten tatsächlichen oder virtuellen Kamerabildes. Zugleich ist eine flexible Anpassung der Auflösung möglich.

Die Unteransprüche zeigen bevorzugte Weiterbildungen der Erfindung.

Es ist vorteilhaft, wenn der vorgewählte Bildbereich vorgewählt wird, indem ein zuvor erzeugtes virtuelles Kamerabild auf Bildartefakte untersucht wird und ein den Bildartefakten zugehöriger Bereich in dem zugehörigen tatsächlichen Kamerabild identifiziert wird. Auf diese Weise wird eine genaue Auswahl des vorgewählten Bildbereiches ermöglicht und somit eine vollständige Vermeidung von Bildartefakten ermöglicht.

Ferner ist es vorteilhaft, wenn der vorgewählte Bildbereich einen äußeren Bildbereich des tatsächlichen Kamerabildes der zugehörigen Kamera abbildet. Gerade in diesem äußeren Bildbereich des tatsächlichen Kamerabildes treten Bildartefakte auf, die durch ein Anpassen der Auflösung in dem vorgewählten Bildbereich effizient verringert werden. Somit wird eine besonders starke Verbesserung der Bildqualität erzielt.

Ferner ist es vorteilhaft, wenn der vorgewählten Bildbereiche vorgewählt wird, indem dieser basierend auf einer Position und Orientierung der zumindest einen Kamera an dem Fahrzeug errechnet wird. Auf diese Weise kann der vorgewählte Bildbereich bereits vor einem Einbau der Kameras vorgewählt werden. Damit wird eine einfache Anpassung des Verfahrens für eine Vielzahl von Kameraanordnungen ermöglicht.

Es ist vorteilhaft, wenn eine optische Achse der zumindest einen Kamera seitlich von dem Fahrzeug weg gerichtet ist und der vorgewählte Bildbereich einen Nahbereich des Fahrzeuges in dem zugehörigen tatsächlichen Kamerabild dieser Kamera abbildet. Da bei einer solchen Anordnung zwischen Kamera und Fahrbahnoberfläche im Nahbereich des Fahrzeuges besonders starke Bildartefakte auftreten können, wird durch deren Verringerung eine besonders starke Verbesserung der Bildqualität erreicht

Auch ist es vorteilhaft, wenn eine für den vorgewählten Bildbereich genutzte Auflösung von der Position der virtuellen Kamera in dem virtuellen Raum abhängig ist. Somit kann eine besonders effiziente Anpassung der Auflösung des vorgewählten Bildbereiches an die Auflösung des virtuellen Kamerabildes erfolgen. Bildartefakte werden somit besonders effizient vermieden.

Ferner ist es vorteilhaft, wenn eine für den vorgewählten Bildbereich genutzte Auflösung von einer Blickrichtung der virtuellen Kamera in dem virtuellen Raum abhängig ist. Somit kann eine besonders effiziente Anpassung der Auflösung des vorgewählten Bildbereiches an die Auflösung des virtuellen Kamerabildes erfolgen. Bildartefakte werden somit besonders effizient vermieden.

Eine Vorrichtung, die dazu eingerichtet ist, das erfindungsgemäße Verfahren auszuführen, weist alle Vorteile des erfindungsgemäßen Verfahrens auf.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Ablaufdiagramm des erfindungsgemäßen Verfahrens in einer beispielhaften Ausführungsform,
- Figur 2: eine Darstellung eines Fahrzeuges mit einer Vorrichtung, die das erfindungsgemäße Fahren in der beispielhaften Ausführungsform durchführt,
- Figur 3: eine schematische Darstellung einer ersten Kamera bei einem Erfassen eines tatsächlichen Kamerabildes,
- Figur 4: eine schematische Darstellung einer virtuellen Kamera in einem virtuellen Raum, und
- Figur 5: eine schematische Darstellung der virtuellen Kamera in dem virtuellen Raum an zwei unterschiedlichen Positionen.

### Ausführungsformen der Erfindung

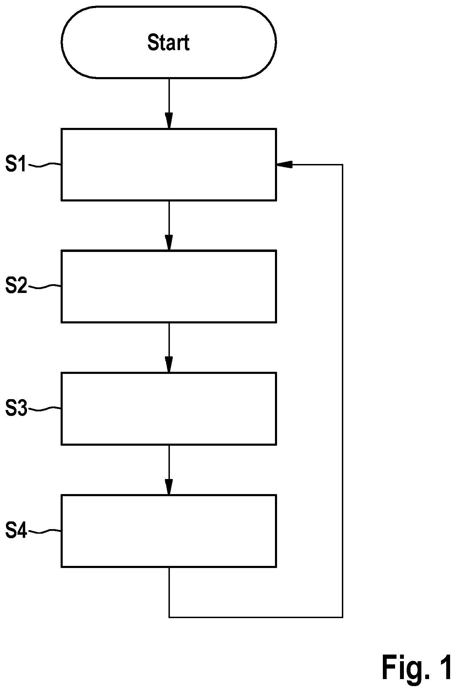

Figur 1 zeigt ein Ablaufdiagramm des erfindungsgemäßen Verfahrens in einer beispielhaften Ausführungsform. Das Verfahren wird von einer Vorrichtung 10 durchgeführt, die in dieser Ausführungsform eine digitale Recheneinheit zur Bildbearbeitung ist. Das Verfahren wird gestartet, sobald die Vorrichtung 10 in Betrieb genommen wird. Nach einem Start des Verfahrens wird ein erster Schritt S1 des Verfahrens ausgeführt.

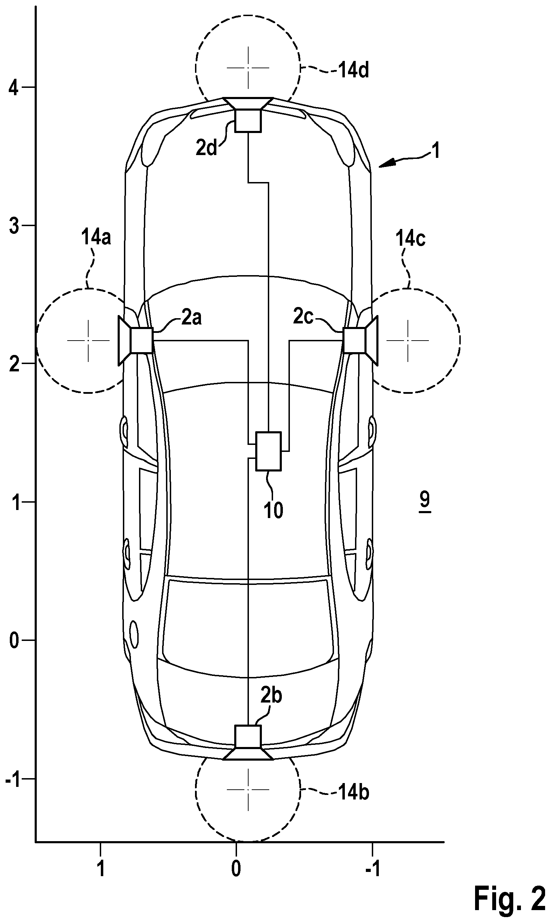

In dem ersten Schritt des Verfahrens erfolgt ein Erfassen zumindest eines tatsächlichen Kamerabildes 4 mittels zumindest einer an einem Fahrzeug 1 angeordneten Kamera 2a, 2b, 2c, 2d, wobei das tatsächliche Kamerabild 4 einen Ausschnitt einer Fahrzeugumgebung des Fahrzeuges 1 darstellt. Das Fahrzeug 1 mit der Vorrichtung 10 ist in Figur 2 dargestellt.

Die an dem Fahrzeug 1 angeordneten Kameras 2a, 2b, 2c, 2d werden in dieser Ausführungsform durch eine erste Kamera 2a, eine zweite Kamera 2b, eine dritte Kamera 2c und eine vierte Kamera 2d gebildet. Die erste Kamera 2a ist an einem linken Außenspiegel des Fahrzeuges 1 angeordnet, wobei eine optische Achse 8 der ersten Kamera 2a von dem Fahrzeug 1 weg gerichtet ist. Dabei bildet die optische Achse 8 der ersten Kamera 2a mit der Fahrbahnoberfläche 9 einen spitzen Winkel, der von einem Schnittpunkt S zwischen der optischen Achse 8 der ersten Kamera 2a und der Fahrbahnoberfläche 9 aus gesehen auf Seiten des Fahrzeuges 1 liegt. Die zweite Kamera 2b ist an einem Heck des Fahrzeuges 1 angeordnet, wobei eine optische Achse der zweiten Kamera 2b von dem Fahrzeug 1 weg gerichtet ist. Dabei bildet die optische Achse der zweiten Kamera 2b mit der Fahrbahnoberfläche 9 einen spitzen Winkel, der von einem Schnittpunkt zwischen der optischen Achse der zweiten Kamera 2b und der Fahrbahnoberfläche 9 aus gesehen auf Seiten des Fahrzeuges 1 liegt. Die dritte Kamera 2c ist an einem rechten Außenspiegel des Fahrzeuges 1 angeordnet, wobei eine optische Achse der dritten Kamera 2c von dem Fahrzeug 1 weg gerichtet ist. Dabei bildet die optische Achse der dritten Kamera 2c mit der Fahrbahnoberfläche 9 einen spitzen Winkel, der von einem Schnittpunkt zwischen der optischen Achse der dritten Kamera 2c und der Fahrbahnoberfläche 9 aus gesehen auf Seiten des Fahrzeuges 1 liegt. Die vierte Kamera 2d ist an einer Fahrzeugfront des Fahrzeuges 1 angeordnet, wobei eine optische Achse der vierten Kamera 2d von dem Fahrzeug 1 weg gerichtet ist. Dabei bildet die optische Achse der vierten Kamera 2d mit der Fahrbahnoberfläche 9 einen spitzen Winkel, der von einem Schnittpunkt zwischen der optischen Achse der vierten Kamera 2d und der Fahrbahnoberfläche 9 aus gesehen auf Seiten des Fahrzeuges 1 liegt. Jede der an dem Fahrzeug 1 angeordneten Kameras 2a, 2b, 2c, 2d ist mit einer Fischaugenlinse ausgestattet, um einen möglichst großen Bereich der Fahrzeugumgebung zu erfassen. Die Fahrbahnoberfläche 9 ist eine Fläche, auf der das Fahrzeug 1 steht.

Jede der an dem Fahrzeug 1 angeordneten Kameras 2a, 2b, 2c, 2d ist über jeweils eine Datenleitung mit der Vorrichtung 10 gekoppelt. In dem ersten Schritt S1 wird von jeder der Kameras 2a, 2b, 2c, 2d jeweils ein tatsächliches Kamerabild 4 an die Vorrichtung 10 übertragen.

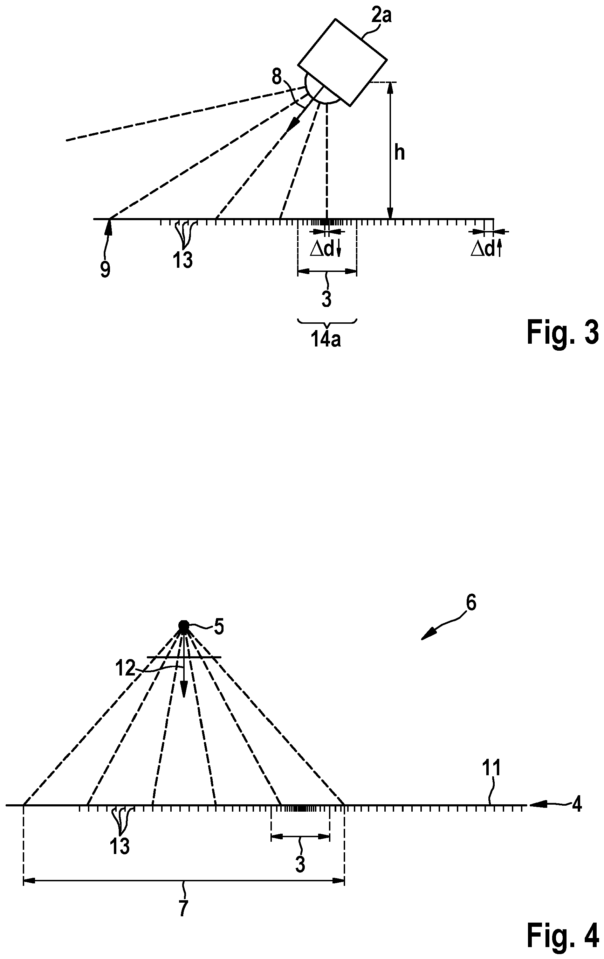

Figur 3 zeigt eine schematische Darstellung der ersten Kamera 2a bei dem Erfassen eines tatsächlichen Kamerabildes 4. Die erste Kamera 2a ist in einer Höhe h über der Fahrbahnoberfläche 9 angeordnet. Es ist ersichtlich, dass die optische Achse 8 der ersten Kamera 2a in dem spitzen Winkel auf die Fahrbahnoberfläche 9 gerichtet ist. Einzelne Punkte der Fahrbahnoberfläche 9 werden jeweils in einem Bildpunkt des tatsächlichen Kamerabildes 4 dargestellt. Dabei ist es ersichtlich, dass die Bereiche der Fahrbahnoberfläche 9, welche besonders nahe an der ersten Kamera 2a liegen, durch mehr Bildpunkte pro Flächeneinheit der Fahrbahnoberfläche 9 dargestellt werden, als die Bereiche der Fahrbahnoberfläche 9, welche weiter von der ersten Kamera 2a entfernt sind. Eine örtliche Auflösung der Fahrbahnoberfläche 9 in dem tatsächlichen Kamerabild 4 ist durch die unter der Fahrbahnoberfläche 9 dargestellten Markierungen 13 in Figur 3 dargestellt. Jede der Markierungen 13 entspricht dabei einem Bildpunkt in dem tatsächlichen Kamerabild 4. Es ist ersichtliche, dass eine Abstand Δd zwischen den Markierungen 13 über die Fahrbahnoberfläche 9 hinweg nicht konstant ist.

Nach dem ersten Schritt S1 wird ein zweiter Schritt S2 ausgeführt.

In dem zweiten Schritt S2 erfolgt ein räumliches Aufspannen des zumindest einen tatsächlichen Kamerabildes 4 in einem virtuellen Raum 6. Figur 4 zeigt eine schematische Darstellung einer virtuellen Kamera 5 in einem virtuellen Raum 6. In dem virtuellen Raum 6 befindet sich eine geometrische Projektionsfläche 11, welche ein virtuelles Äquivalent des Fahrzeuges 1 in dem virtuellen Raum 6 umhüllt. Der virtuelle Raum 6 ist eine mathematische und/oder grafische Darstellung des tatsächlichen Raumes um das Fahrzeug 1. In Figur 6 ist lediglich ein Bodenbereich der geometrischen Projektionsfläche 11 dargestellt. In einem Nahbereich des Fahrzeuges 1 entspricht der Bodenbereich der geometrischen Projektionsfläche 11 zumeist dem Fahrzeuguntergrund 9. Das tatsächliche Kamerabild 4 wird als eine Textur auf die geometrische Projektionsfläche 11 übertragen. Somit spannt das tatsächliche Kamerabild 4 eine Fläche in dem virtuellen Raum 6 auf. Da in dem in den Figuren 3 und 4 gezeigten Beispiel der gezeigte Bereich des Fahrzeuguntergrunds 9 und der Bodenbereich der geometrischen Projektionsfläche 11 einander entsprechen ist es ersichtlich, dass die durch das tatsächliche Kamerabild 4 gebildete Texturierung der geometrischen Projektionsfläche ortsabhängig eine unterschiedliche Auflösung aufweist. Dies ist darin begründet, dass die Bereiche der Fahrbahnoberfläche 9, welche besonders nahe an der ersten Kamera 2a liegen, durch mehr Bildpunkte pro Flächeneinheit in dem tatsächlichen Kamerabild 4 dargestellt sind, als die Bereiche der Fahrbahnoberfläche 9, welche weiter von der ersten Kamera 2a entfernt sind. Dies wird durch die in Figur 4 dargestellten Markierungen 13 unter der geometrischen Projektionsfläche 11 verdeutlicht. Jede der Markierungen 13 entspricht dabei einem Bildpunkt des tatsächlichen Kamerabildes 4.

Nach dem zweiten Schritt S2 wird ein dritter Schritt S3 ausgeführt.

In dem dritten Schritt S3 erfolgt ein Bereitstellen eines vorgewählten Bildbereiches 3 des tatsächlichen Kamerabildes 4, in dem Bildartefakte auftreten, in mehreren Auflösungen. Als vorgewählter Bildbereich 3 des tatsächlichen Kamerabildes 4 ist in dieser Ausführungsform der Bildbereich in dem tatsächlichen Kamerabild 4 gewählt, welcher einen Bereich des Fahrzeuguntergrundes 9 darstellt, in dem ein Flächenbereich durch eine besonders hohe Anzahl von Bildpunkten in dem tatsächlichen Kamerabild 4 dargestellt wird. Dieser Bildbereich kann beispielsweise dadurch definiert sein, dass eine Anzahl von Bildpunkten pro Flächeneinheit der geometrischen Projektionsfläche überschritten wird. In der in Figur 3 gezeigten Darstellung entspricht der vorgewählte Bildbereich 3 dem Bereich des Kamerabildes 4, welcher der ersten Kamera 2a am nächsten gelegen ist. Dies ist also der Bereich, mit besonders nahe aneinander gelegenen Markierungen 13.

In der hier beschriebenen Ausführungsform wird der vorgewählte Bildbereich 3 in einer halben Auflösung und in einer viertel-Auflösung bereitgestellt. Um den vorgewählten Bildbereich 3 in der halben Auflösung bereitzustellen wird dieser Bildbereich aus dem tatsächlichen Kamerabild 4 extrahiert und jeder zweite Bildpunkt dieses Bildbereichs wird verworfen. Um den vorgewählten Bildbereich 3 in der viertel-Auflösung bereitzustellen werden entsprechend drei von vier aufeinanderfolgenden Pixeln verworfen. Sowohl der vorgewählte Bildbereich 3 in seiner ursprünglichen Auflösung als auch der vorgewählte Bildbereich 3 in halber Auflösung als auch der vorgewählte Bildbereich 3 in der viertel-Auflösung werden gespeichert. Alternativ zu dem hier beschriebenen Verfahren zur Reduzierung der Auflösung des vorgewählten Bildbereiches 3 können auch alle anderen bekannten Verfahren zur Reduzierung einer Bildauflösung genutzt werden, die beispielsweise eine Interpolation von Bildpunkten umfassen.

Da der vorgewählte Bildbereich 3 jeweils einen der zugehörigen Kamera 2a, 2b, 2c, 2d nächstgelegenen Bereich des Fahrzeuguntergrundes 9 abbildet und die optischen Achsen der Kameras 2a, 2b, 2c, 2d in dem spitzen Winkel auf den Fahrzeuguntergrund 9 gerichtet sind , ergibt es sich, dass der vorgewählte Bildbereich 3 den Nahbereich des Fahrzeuges 1 in dem tatsächlichen Kamerabild 4 der ersten Kamera 2a abbildet.

Erfindungsgemäß werden also örtlich begrenzte Texturbereiche mit einer unterschiedlichen Auflösung erzeugt, die es erlauben, eine Anzahl der Schritte zu verringern, die ein Texturelement in den Rohdaten der Texturkoordinaten springt.

Nach dem dritten Schritt S3 wird ein vierter Schritt S4 ausgeführt.

In dem vierten Schritt S4 erfolgt ein Erzeugen eines virtuellen Kamerabildes 7 aus Sicht einer virtuellen Kamera 5 an einer Position in dem virtuellen Raum 6, welches das aufgespannte tatsächliche Kamerabild 4 darstellt, wobei für den vorgewählten Bildbereich 3 des tatsächlichen Kamerabildes 4 diejenige der bereitgestellten Auflösungen genützt wird, welche eine optische Präsenz des Bildartefaktes verringert. Dazu wird zunächst eine Blickrichtung 12 und die Position der virtuellen Kamera 5 in dem virtuellen Raum 6 festgelegt. Das Festlegen der Blickrichtung 12 und der Position kann beispielsweise durch einen Fahrer des Fahrzeuges 1 erfolgen. In dem in Figur 4 gezeigten Beispiel ist die Position der virtuellen Kamera 5 seitlich neben dem Fahrzeug 1 und deren Blickrichtung, also deren optische Achse, ist senkrecht auf den Fahrzeuguntergrund 9 gerichtet. Dies entspricht einer Blickrichtung 12, die ebenfalls senkrecht auf den Bodenbereich des geometrischen Projektionskörpers 11 gerichtet ist. Das virtuelle Kamerabild 7 wird erzeugt, indem dieses aus den Bildpunkten des tatsächlichen Kamerabildes 4, welche eine Textur des geometrischen Projektionskörpers 4 bilden, zusammengesetzt wird. Das virtuelle Kamerabild 7 bildet somit den geometrischen Projektionskörper 11 aus einer vorgegebenen Position bei einer vorgegebenen Blickrichtung 12 ab. Wie ebenfalls aus Figur 4 ersichtlich ist, weist der vorgewählte Bildbereich 3, der in Figur 4 in seiner ursprünglichen Auflösung dargestellt ist, eine höhere Auflösung auf, als die umliegenden Bereiche. Dies führt jedoch zu einer optischen Präsenz von Bildartefakten in dem virtuellen Kamerabild 7. Die ursprüngliche Auflösung ist dabei eine Auflösung der an dem Fahrzeug 1 angeordneten Kameras 2a, 2b, 2c, 2d.

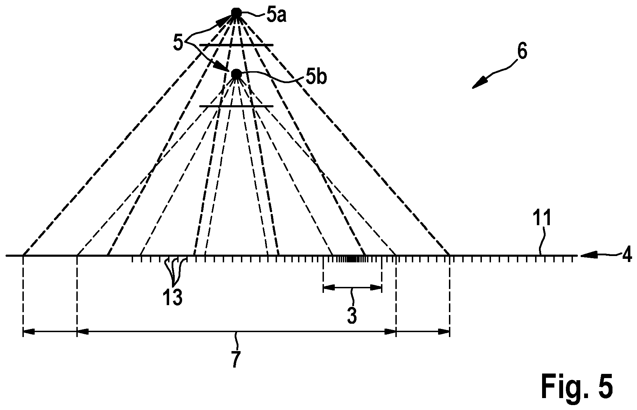

Ein Entstehen solcher Bildartefakte wird mit Hinblick auf Figur 5 beschrieben. Dabei wird davon ausgegangen, dass die virtuelle Kamera 5 in dem virtuellen Raum 6 von einer ersten Position 5a in eine zweite Position 5b wechselt. Es ist ersichtlich, dass der vorgewählte Bildbereich 3 von einem mittleren Bereich des virtuellen Kamerabildes 7 zu einem äußeren Bereich des virtuellen Kamerabildes 7 verschoben wird. Somit kommt es zu einer Bewegung des vorgewählten Bildbereiches 3 in dem virtuellen Kamerabild 7. Da jedoch eine Bildmatrix des virtuellen Kamerabildes 7 konstant ist und für den vorgewählten Bildbereich 3 zunächst mehr Bildpunkte zur Verfügung stehen als für die umliegenden Bereiche, muss beständig eine neue Auswahl der in dem virtuellen Kamerabild 7 genutzten Bildpunkte, also der von dem tatsächlichen Kamerabild 4 in das virtuelle Kamerabild 7 übertragenen Bildpunkte, erfolgen. Dies führt dazu, dass sich die Farb- und Helligkeitswerte der Bildpunkte in dem virtuellen Kamerabild 7 für den vorgewählten Bildbereich 3 beständig ändern. Dies wird als ein Rauschen und somit als ein Bildartefakt wahrgenommen.

Bildartefakt entstehen, da tatsächliche Kamerabilder 4 auf eine geometrische Projektionsfläche 11, insbesondere den Bodenbereich der geometrischen Projektionsfläche 11, projiziert werden. Aufgrund dieser Projektion ist eine Verteilung von Bildpunkten über die geometrische Projektionsfläche 11 nicht gleichmäßig. Sobald die geometrische Projektionsfläche 11 durch die virtuelle Kamera 5 abgebildet wird, wird ein Bild, hier das virtuelle Kamerabild 7, erzeugt, welches eine ungleichmäßige Textur abbildet. Bewegt sich die virtuelle Kamera 5 in dem virtuellen Raum 6 wird diese ungleichmäßige Textur als Rauschen sichtbar. Dies liegt darin begründet, dass die zu jedem Bildbereich korrespondierenden Texturelemente unregelmäßige Sprünge über eine ursprüngliche Textur machen. Insbesondere in einem Bodenbereich, in dem eine Dichte von Bildpunkten sehr hoch ist, können bereits geringfügige Bewegungen der virtuellen Kamera 5 zu einem großen Versatz der Texturen führen.

Erfindungsgemäß wird jedoch für den vorgewählten Bildbereich 3 des tatsächlichen Kamerabildes 4 eine der bereitgestellten Auflösungen genutzt. So wird bspw. der vorgewählte Bildbereich 3 in seiner ursprünglichen Auflösung durch den vorgewählten Bildbereich 3 in halber Auflösung ersetzt. Wie zuvor beschrieben, wird das tatsächliche Kamerabild 4 als eine Textur auf die geometrische Projektionsfläche 11 gelegt. Wird für den vorgewählten Bildbereich 3 des tatsächlichen Kamerabildes eine Auflösung genutzt, die nicht der ursprünglichen Auflösung entspricht, so wird der entsprechende Teil der Textur der geometrischen Projektionsfläche 11 durch den vorgewählten Bildbereich mit der veränderten Auflösung ersetzt. Optional ist die für den vorgewählten Bildbereich 3 genutzte Auflösung von der Position und/oder Blickrichtung der virtuellen Kamera 5 in dem virtuellen Raum 6 abhängig. Die Auswahl, welche der Auflösungen für das Erzeugen des virtuellen Kamerabildes 7 genutzt wird, kann dabei vorab ermittelt und abhängig von der Position und/oder der Blickrichtung 12 der virtuellen Kamera 5 gespeichert werden. Optimale Werte können dabei in einer Versuchsanordnung ermittelt werden.

In der hier beschriebenen Ausführungsform bildet der vorgewählte Bildbereich 3 einen vorgewählten Bereich 14a, 14b, 14c, 14d ab, der entlang einer Hochachse des Fahrzeuges 1 unter der jeweils zugehörigen Kamera 2a, 2b, 2c, 2d liegt, die das tatsächliche Kamerabild 4 erfasst. Der vorgewählte Bildbereich 3 entspricht dabei einem sehr kleinen Ausschnitt des tatsächlichen Kamerabildes 4. Es wird somit ein Abbild dieser vorgewählten Bereiche 14a, 14b, 14c, 14d in mehreren Auflösungen erzeugt, so dass eine Pyramide von Abbildungen unterschiedlicher Auflösungen vorliegt. Auf diese Weise kann eine Bildpunktdichte für diese Bereiche künstlich verringert werden.

Eine Position, Form und Größe des vorgewählten Bildbereiches 3 kann auf unterschiedliche Weise ermittelt werden. In dieser Ausführungsform wird der vorgewählte Bildbereich 3 ermittelt, indem ein zuvor erzeugtes virtuelles Kamerabild 7 auf Bildartefakte untersucht wird und ein dem Bildartefakt zugehöriger Bereich in dem zugehörigen tatsächlichen Kamerabild 4 identifiziert wird. Dabei wird das erfindungsgemäße Verfahren ausgeführt, wobei jedoch kein vorgewählter Bildbereich bereitgestellt wird und beim Erzeugen des virtuellen Kamerabildes 7 für das gesamte tatsächliche Kamerabild 4 die ursprüngliche Auflösung genutzt wird. Im Folgenden wird eine Position und ein Umfang von Bildartefakten gespeichert und die zugehörigen Bereiche in dem tatsächlichen Kamerabild 4 werden als ein vorgewählter Bildbereich 3 ausgewählt.

Alternativ wird die Position, Form und Größe des vorgewählten Bildbereiches 3 basierend auf einer Position und Orientierung der ersten bis vierten Kamera 2a, 2b, 2c, 2d an dem Fahrzeug 1 errechnet. Dazu werden beispielsweise in einer Simulationssoftware solche Bereiche des tatsächlichen Kamerabildes 4 ermittelt, in der eine Anzahl von Bildpunkten pro Flächeneinheit der Fahrbahnoberfläche 9 über einem vorgegebenen Schwellenwert liegt.

Nach dem vierten Schritt S4 verzweigt das Verfahren zurück auf den ersten Schritt S1, wodurch das erfindungsgemäße Verfahren in einer Schleife ausgeführt wird.

Neben der obigen schriftlichen Offenbarung wird explizit auf die Offenbarung der Figuren 1 bis 5 verwiesen.

## Patentansprüche

1. Verfahren zum Darstellen einer Fahrzeugumgebung eines Fahrzeuges (1), umfassend die Schritte:
- Erfassen zumindest eines tatsächlichen Kamerabildes (4) mittels zumindest einer an dem Fahrzeug angeordneten Kamera (2a, 2b, 2c, 2d), wobei das tatsächliche Kamerabild (4) die Fahrzeugumgebung darstellt,
- Räumliches Aufspannen des zumindest einen tatsächlichen Kamerabildes mittels einer Projektionsfläche in einem virtuellen Raum (6),
**gekennzeichnet, durch** die Schritte:
- Bereitstellen eines vorgewählten Bildbereiches (3) des tatsächlichen Kamerabildes (4), in dem Bildartefakte auftreten, in mehreren Auflösungen, wobei der vorgewählte Bildbereich (3) ein Ausschnitt des tatsächlichen Kamerabildes (4) ist,
- Erzeugen eines virtuellen Kamerabildes (7) aus Sicht einer virtuellen Kamera (5) an einer Position in dem virtuellen Raum (6), welches das aufgespannte tatsächliche Kamerabild (4) darstellt, wobei für den vorgewählten Bildbereich (3) des tatsächlichen Kamerabildes diejenige der bereitgestellten Auflösungen genutzt wird, welche eine optische Präsenz der Bildartefakte verringert;
wobei die Bildartefakte bei Bewegung der virtuellen Kamera auftreten und in einem beständigen Ändern der Farb- und Helligkeitswerte in dem virtuellen Kamerabild bestehen.

2. Verfahren gemäß Anspruch 1, **dadurch gekennzeichnet, dass** der vorgewählten Bildbereiche (3) vorgewählt wird, indem ein zuvor erzeugtes virtuelles Kamerabild (7) auf Bildartefakte untersucht wird und ein den Bildartefakten zugehöriger Bereich in dem zugehörigen tatsächlichen Kamerabild identifiziert wird.

3. Verfahren gemäß Anspruch 1, **dadurch gekennzeichnet, dass** der vorgewählten Bildbereiche (3) vorgewählt wird, indem dieser basierend auf einer Position und Orientierung der zumindest einen Kamera (2a, 2b, 2c, 2d) an dem Fahrzeug (1) errechnet wird.

4. Verfahren gemäß einem der vorangehenden Ansprüche, **dadurch gekennzeichnet, dass** eine optische Achse (8) der zumindest einen Kamera (2a, 2b, 2c, 2d) seitlich von dem Fahrzeug (1) weg gerichtet ist und der vorgewählte Bildbereich einen Nahbereich des Fahrzeuges (1) in dem zugehörigen tatsächlichen Kamerabild (4) dieser Kamera (2a, 2b, 2c, 2d) abbildet.

5. Verfahren gemäß einem der vorangehenden Ansprüche, **dadurch gekennzeichnet, dass** eine für den vorgewählten Bildbereich (3) genutzte Auflösung von der Position der virtuellen Kamera (5) in dem virtuellen Raum (6) abhängig ist.

6. Verfahren gemäß einem der vorangehenden Ansprüche, **dadurch gekennzeichnet, dass** eine für den vorgewählten Bildbereich (3) genutzte Auflösung von einer Blickrichtung der virtuellen Kamera (5) in dem virtuellen Raum (6) abhängig ist.

7. Vorrichtung (10), die dazu eingerichtet ist, das Verfahren gemäß einem der Ansprüche 1 bis 7 durchzuführen.

## Claims

1. Method for presenting a vehicle environment of a vehicle (1), comprising the steps of:
- capturing at least one actual camera image (4) using at least one camera (2a, 2b, 2c, 2d) arranged on the vehicle, wherein the actual camera image (4) presents the vehicle environment,
- spatially placing the at least one actual camera image in a virtual space (6) by way of a projection surface, **characterized by** the steps of:
- providing a preselected image region (3) of the actual camera image (4) in which image artefacts occur in a plurality of resolutions, wherein the preselected image region (3) is an extract of the actual camera image (4),
- producing a virtual camera image (7), which presents the placed actual camera image (4), from the view of a virtual camera (5) at a position in the virtual space (6), wherein that resolution of the provided resolutions which reduces an optical presence of the image artefacts is used for the preselected image region (3) of the actual camera image;
wherein the image artefacts occur upon movement of the virtual camera and consist of a consistent change of the colour and brightness values in the virtual camera image.

2. Method according to Claim 1, **characterized in that** the preselected image region (3) is preselected by examining a previously produced virtual camera image (7) for image artefacts and identifying a region associated with the image artefacts in the associated actual camera image.

3. Method according to Claim 1, **characterized in that** the preselected image regions (3) is preselected by calculating it based on a position and orientation of the at least one camera (2a, 2b, 2c, 2d) on the vehicle (1).

4. Method according to one of the preceding claims, **characterized in that** an optical axis (8) of the at least one camera (2a, 2b, 2c, 2d) is directed laterally away from the vehicle (1) and the preselected image region images a close range of the vehicle (1) in the associated actual camera image (4) of said camera (2a, 2b, 2c, 2d).

5. Method according to one of the preceding claims, **characterized in that** a resolution, used for the preselected image region (3), is dependent on the position of the virtual camera (5) in the virtual space (6) .

6. Method according to one of the preceding claims, **characterized in that** a resolution, used for the preselected image region (3), is dependent on a viewing direction of the virtual camera (5) in the virtual space (6) .

7. Apparatus (10), set up to perform the method according to one of Claims 1 to 7.

## Revendications

1. Procédé de représentation de l'environnement d'un véhicule (1), le procédé comprenant les étapes suivantes :
- détecter au moins une image de caméra réelle (4) au moyen d'au moins une caméra (2a, 2b, 2c, 2d) disposée au niveau du véhicule, l'image de caméra réelle (4) représentant l'environnement du véhicule,
- fixer spatialement l'au moins une image de caméra réelle au moyen d'une surface de projection dans un espace virtuel (6),
**caractérisé par** les étapes suivantes :
- fournir une zone d'image présélectionnée (3) de l'image de caméra réelle (4), dans laquelle des artefacts d'image se produisent, dans plusieurs résolutions, la zone d'image présélectionnée (3) étant une partie de l'image de caméra réelle (4),
- générer une image de caméra virtuelle (7) telle qu'elle est visualisée par une caméra virtuelle (5) à une position dans l'espace virtuel (6) qui représente l'image de caméra réelle (4) fixée, celle des résolutions fournies qui réduit la présence optique d'artefacts d'image étant utilisée pour la zone d'image présélectionnée (3) de l'image de caméra réelle ;
les artefacts d'image se produisant lors du mouvement de la caméra virtuelle et consistant en une modification durable des valeurs de couleur et de luminosité dans l'image de caméra virtuelle.

2. Procédé selon la revendication 1, **caractérisé en ce que** l'on présélectionne les zones d'image présélectionnées (3) en examinant une image de caméra virtuelle (7), générée précédemment, pour rechercher des artefacts d'image et en identifiant une zone, associée aux artefacts d'image, dans l'image de caméra réelle associée.

3. Procédé selon la revendication 1, **caractérisé en ce que** l'on présélectionne les zones d'image présélectionnées (3) en les examinant en fonction de la position et de l'orientation de l'au moins une caméra (2a, 2b, 2c, 2d) placée au niveau du véhicule (1).

4. Procédé selon l'une des revendications précédentes, **caractérisé en ce qu'**un axe optique (8) de l'au moins une caméra (2a, 2b, 2c, 2d) est dirigé latéralement à l'opposé du véhicule (1) et **en ce que** la zone d'image présélectionnée reproduit une zone proche du véhicule (1) dans l'image de caméra réelle (4) associée de cette caméra (2a, 2b, 2c, 2d).

5. Procédé selon l'une des revendications précédentes, **caractérisé en ce qu'**une résolution, utilisée pour la zone d'image présélectionnée (3), dépend de la position de la caméra virtuelle (5) dans l'espace virtuel (6).

6. Procédé selon l'une des revendications précédentes, **caractérisé en ce qu'**une résolution, utilisée pour la zone d'image présélectionnée (3), dépend d'une direction de visée de la caméra virtuelle (5) dans l'espace virtuel (6).

7. Dispositif (10) adapté pour mettre en œuvre le procédé selon l'une des revendications 1 à 7.
